# EUROPÄISCHE PATENTSCHRIFT

(11) **EP 0 711 659 B1**
(45) Veröffentlichungstag und Bekanntmachung des Hinweises auf die Patenterteilung: **28.08.2002**
(21) Anmeldenummer: 95117400.2
(22) Anmeldetag: 06.11.1995
(51) Int. Cl.: B32B 27/12, B32B 3/28, E04B 1/90, E04C 2/24

(54) **Halbzeug, nämlich Dämmplatte, insbesondere für einen Fussboden- oder Wandaufbau**
Semi-finished product, especially insulating panel for a floor or wall
Produit semi-fini, en particulier plaque d'isolation pour plancher ou mur

(30) Priorität: 08.11.1994 DE 9417902 U
(43) Veröffentlichungstag der Anmeldung: 15.05.1996
(73) Patentinhaber: Wedi, Stephan, 48282 Emsdetten (DE)
(72) Erfinder: Wedi, Stephan, 48282 Emsdetten (DE)
(74) Vertreter: Hoffmeister, Helmut, Dr. Dipl.-Phys.

(56) Entgegenhaltungen:
- EP-A- 0 466 163
- DE-A- 2 751 854
- DE-A- 4 204 831
- FR-A- 2 600 348
- US-A- 3 953 629
- US-A- 3 978 263

## Beschreibung

Die Erfindung betrifft ein Halbzeug, nämlich Dämmplatte, insbesondere für einen Fußboden- oder Wandaufbau, aufweisend
- wenigstens zwei Platten mit Material-Oberflächenvertiefungen,
- einer Verbindungsschicht mit einem ersten Armierungsgewebe und Verankerungselementen und
- einem ersten aushärtbaren Kunststoffmörtel zur Verbindung beider Platten.

Aus der EP-A-0 466 163 ist ein Halbzeug, nämlich eine Bauplatte oder Bauprofil aus Kunststoff-Hartschaumplatten bekannt, das aus wenigstens zwei Platten aus Kunststoff-Hartschaum und einer dazwischen liegenden Schicht besteht. Die dazwischenliegende Schicht wird aus einem aushärtbaren Kunststoffmörtel mit einem Armierungsgewebe und Verankerungselementen gebildet.

Dieses Halbzeug hat sich bewährt. Allerdings eignet es sich nur als Bauplatte. Durch die Verbindungsschicht ist es möglich, insbesondere die Dicke des Halbzeugs durch ein Zusammenkleben mehrerer Kunststoff-Hartschaumplatten und damit dessen Eestigkeitseigenschaften zu erhöhen; das aber nur verbunden mit verbesserten Wärmedämmungseigenschaften. Als nachteilig erweist es sich, daß bei der Herstellung des Halbzeugs ein hoher Aufwand für das Einbringen von Verankerungselementen erforderlich ist.

Aus der DE-A-4 204 831 ist eine Matte bekannt, die aus einer Oberschicht aus elastomerem Werkstoff, einer Zwischenschicht aus geschäumtem Kunststoff und einer Folie als Unterschicht besteht. Die Gummischicht kann ein Gummi oder ein gummiähnlicher Kunststoff sein.

Eingesetzt wird eine solche Matte lediglich in Kraftfahrzeugen. Der beschriebene Aufbau der bekannten Matte wurde nur deshalb so vorgenommen, um beim Wiederverwerten von Altmatten Gummi- und Kunststoff-Abfälle leichter voneinander trennen zu können.

Aus der AT-B-332 073 ist ein Schallschutz-Wandelement bekannt. Es besteht aus auf 3 bis 30 mm zerkleinerten Gummi- und Cordgewebeeinlagen gebrauchter Autoreifen; die durch Vulkanisation oder durch ein Klebemittel derart miteinander zu einem schallabsorbierenden Wandelement verbunden sind, daß das Wandelement eine porige Struktur ungleichmäßiger Ausbildung aufweist. Das verarbeitete Material nimmt einen Volumenanteil von nicht mehr als 60 % ein. Das Wandelement hat ein spezifisches Gewicht, welches < 0,6 g/cm3 ist.

Das Schallschutz-Wandelement wird nun so verlegt, daß es in einem Tragrahmen vor einem weiteren Dämmelement aus Mineralwolle angeordnet ist. Dahinter befindet sich ein Hallraum, der zur Reflexion des nicht absorbierten Restschalls dient, der erneut auf das Dämmelement aus Mineralwolle und danach das Schallschutz -Wandelement trifft.

Vorgesehen ist ein solcher Aufbau allerdings nur zur Dämmung von Fahrgeräuschen unterschiedlicher Frequenz an stark befahrenen Autostraßen. Darüber hinaus ist der Aufbau auch nicht unkompliziert. Seine Festigkeit erhält das bekannte Schallschutz-Wandelement lediglich nur durch den eingesetzten Tragrahmen.

In der WO 94/08 767 wird eine Verbundplatte beschrieben, die aus einem Kern aus organischen und/oder anorganiechen Stoffen besteht. Sie kann ausgebildet werden als Kunststoff-, Mineral-Platte oder dergleichen. Die Mineralwolle ist beiderseitig von Schaumstoff umgeben. Der so ausgebildete Kern wird ein- oder zweiseitig mit einer Schicht aus aushärtbarem Mörtel beschichtet, in dem eine Armierungsschicht spannungsfrei eingebettet ist.

Diese Verbundplatte ist aber nur Ausgangsmaterial für eine Bauplatte oder eine Verbundplatte gemäß EP-A-0 466 163.

Letztendlich ist aus der DE-A 4 100 914 ein Wandelement bekannt, das aus einer Raum-Trennwand und einer gegenüber dieser schwingungsisoliert angeordneten Installationswand besteht. Die Raumtrennwand und die Installationswand bestehen aus einem Schaumwerkstoff. Die Installationswand trägt Sanitär- und Installationsobjekte. Zwischen der Trennwand und der Installationswand ist eine Zwischenschicht aus einem gummiartigen Werkstoff zur Schwingungs- und Schallabsorption angeordnet. Die Trennwand, die Gummizwischenschicht und die Installationswand werden untereinander verklebt.

Um allerdings die Funktion als Installationswand übernehmen zu können, sind spezielle Baustäbe erforderlich, die das Haltegerüst bilden. Der Aufbau der Trennwand selbst erfolgt wie das Mauern einer üblichen Ziegelwand, nur daß anstelle des Kalks Kleber als Verbinder verwendet wird. Die Gummimatte selbst muß großflächig verklebt werden. Auch der Aufbau der Installationswand erfolgt in bekannter Steinbautechnik. Insgesamt aber ist der Aufbau des bekannten Wandelements kompliziert und aufwendig.

Deshalb besteht die Aufgabe der Erfindung darin, das eingangs genannte Halbzeug so weiter zu entwickeln, daß es als Dämmplatte, insbesondere für einen Fußboden- oder Wandaufbau, mit hoher Wärme- und Geräuschdämmung und hohen Festigkeitseigenschaften einsetzbar und einfach in der Herstellung ist.

Gelöst wird diese Aufgabe durch die Merkmale des Kennzeichens des Anspruchs 1.

Überraschend wurde gefunden, daß durch das Verbinden einer Kunststoff-Hartschaumplatte und einer Gummi-Krepp-Platte sich die geräuschdämmenden Eigenschaften um ca. 10 bis 80 % erhöhen und der in die Hartschaum-vertiefungen und die Krepp-Vertiefungen einfließende flüssige Kunststoffmörtel nach dem Aushärten gleichmäßig über die gesamte Fläche der Kunststoff-Hartschaumplatte und die Gummi-Krepplatte unzählige sogenannte Lunker- oder auch Kapillar- Verankerungen nach dem Aushärten des Kunststoffmörtels bildet. Hierdurch ist es möglich, beide Platten unter Einlegen des Armierungsgewebes miteinander zu verbinden.

Gefunden wurde darüber hinaus, daß eine Kunststoff-Hartschaumplatte auf wenigstens einer Außenseite mit einer äußeren Schicht aus einem zweiten Kunststoffmörtel mit einem eingebetteten zweiten Armierungsgewebe versehen werden kann und Gittertiefflächen ausbildet, die von Erhöhungen des Armierungsgewebes umgeben sind. Die Gummi-Krepp-Platte kann ebenfalls auf wenigstens einer Außenfläche eine weitere äußere Schicht aus einem dritten aushärtbaren Kunststoffmörtel mit einem eingebetteten dritten Armierungsgewebe tragen und Gitterflächen ausbilden, die von Erhöhungen des Armierungsgewebes umgeben sind. Beim Einbringen des flüssigen Kunststoffmörtels werden eine Vielzahl von Flächenankern auf der Außenschicht der Kunststoff-Hartschaumplatte und auf der Gummi-Krepp-Platte ausgebildet.

Von besonderem Vorteil ist, daß durch die erfindungsgemäßen Verankerungselemente eine gleichmäßige Verhaftung beider Platten erreicht wird, ohne daß dabei gesonderte Bohrungen eingebracht werden müssen.

Die andere Außenseite der Kunststoff-Hartschaumplatte, die mit der äußeren Schicht versehen ist, kann entweder gefliest, tapeziert, verputzt oder dergleichen weiterbearbeitet werden.

Als Armierungsgewebe wird vorteilhafter Weise ein Glasfilament-Gewebe eingesetzt. Möglich ist es darüber hinaus, auch ein Metall-Gewebe zu verwenden. Selbstverständlich können auch Acrylfaser-Gewebe, Glasseiden-Gewebe oder dergleichen zum Einsatz kommen.

Die Gummi-Krepplatte ist aus Gummianteilen hergestellt. Unter Gummi werden alle vulkanisierten natürlichen oder synthetischen Kautschuke verstanden. Kautschuke sind hochpolymere, vorwiegend plastische Stoffe, die nach der Vulkanisation in den Zustand der Hochelastizität übergehen und dabei ihre Löslichkeit in organischen Lösungsmitteln verlieren. Unter einer Gummi-Krepplatte soll dabei im folgenden eine Gummi-Schrottmatte verstanden werden, die aus zerkleinertem Altgummi, z.B. Altreifen, in eine Form gegossen zu einer Platte geformt wird. Selbstverständlich ist es auch möglich, daß als Gummi-Krepplatte eine aufgeschäumte Gummimasse zum Einsatz kommt, die über entsprechende Festigkeitseigenschaften verfügt.

Eine solche Gummimasse kann z.B. auch ein Schaumgummi o. dgl. sein.

Der Anteil der eingeschlossenen Luftanteile bei einer Gummi-Krepplatte beträgt etwa 5 bis 60 % des Gesamtvolumens der Gummi-Krepplatte. Die Luft ist dabei in die grobporig-ausgebildete Krepplatte, z.B. aus den Gummischrotteilchen, eingeschlossen. Sie trägt zusammen mit den Gummianteilen zu einer Erhöhung der Wärme- und Schallisolierung bei.

Unter Kunststoff-Hartschaumplatten werden im folgenden Platten verstanden, die aus geschäumten Hartschaumstoffen hergestellt werden. Unter Hartschaumstoffen wird nach DIN 7726, Blatt 1 (DEZ. 1966) ein harter Schaumstoff verstanden, der bei relativ hohem Verformungsgrad geringe elastische Verformbarkeit zeigt. Verwendbar erscheinen zäh-harte als auch spröd-harte Schaumstoffe. Als Ausgangsstoffe für die Herstellung von Hartschaumstoffen sind bekannt:
Polymethacylimid, Phenol-Formaldehydharze, Harnstoffe, PVC, Polistyrol, Phenolharz und Polyuretane. Einige Hartschaumstoffe sind als leicht- andere als schwer entflammbar einzustufen, worauf bei der Verarbeitung geachtet werden muß.

Vorteilhaft ist es, wenn die Dicke der Kunststoff-Hartschaumplatte zur Dicke der Gummi-Krepplatte ein Verhältnis von 0,1 bis 10 : 1, vorzugsweise 1 : 1 aufweist. Das Verhältnis der beiden Platten untereinander bestimmt dabei, in welchem Maße die Platte schalldämmend sein soll und welche speziellen Festigkeitseigenschaften der Platte zuzuordnen sind.

Anstelle der Kunststoff-Hartschaumplatte kann als sichtbare Außenplatte eine Holzplatte, eine Korkplatte, eine Terrazoplatte, eine Holzfaserplatte, eine Metallplatte, eine Acrylplatte, also eine Platte aus organischen oder anorganischen Materialien treten. Beim Sanieren von Altbauten wird die Dämmplatte mit der Gummi-Krepp-Platte auf einem bestehenden Boden aus Fußbodenmatten, einer beschädigten Decke oder Wand angeordnet. Die Sicht- oder Außenplatte als erste Platte kann ein Decor, ein Relief oder dergleichen enthalten. Die Dämmplatte übernimmt damit die Funktion der Schall- und Wärmeisolierung und darüber hinaus die der Raumgestaltung.

Die Erfindung wird nachstehend an einem Ausführungsbeispiel näher erläutert. In der Zeichnung zeigen:
- Fig. 1: eine Bauplatte in einer schematischen perspektivischen Teildarstellung,
- Fig. 2a: einen Teilschnitt einer. Bauplatte gemäß Fig. 1 entlang der Linie IIA - IIA in einer echematischen Darstellung,
- Fig. 2b: eine Kunststoff-Hartschaumplatte mit äußeren Schichten für eine Bauplatte gemäß Fig. 1 von der Gummi-Krepplatte aus gesehen in einer schematischen perspektivischen Teildarstellung,
- Fig. 2c: zwei mit einer Stufenfalz nebeneinander verlegte Bauplatten gemäß Fig. 1 bis 2b,
- Fig. 3: einen Fußbodenaufbau mit einer Bauplatte gemäß Fig. 1 und 2a in einer schematischen perspektivischen Teildarstellung und
- Fig. 4: einen Wandaufbau mit einer Bauplatte gemäß den Fig. 1 und 2a in einer schematischen perspektivischen Teildarstellung.

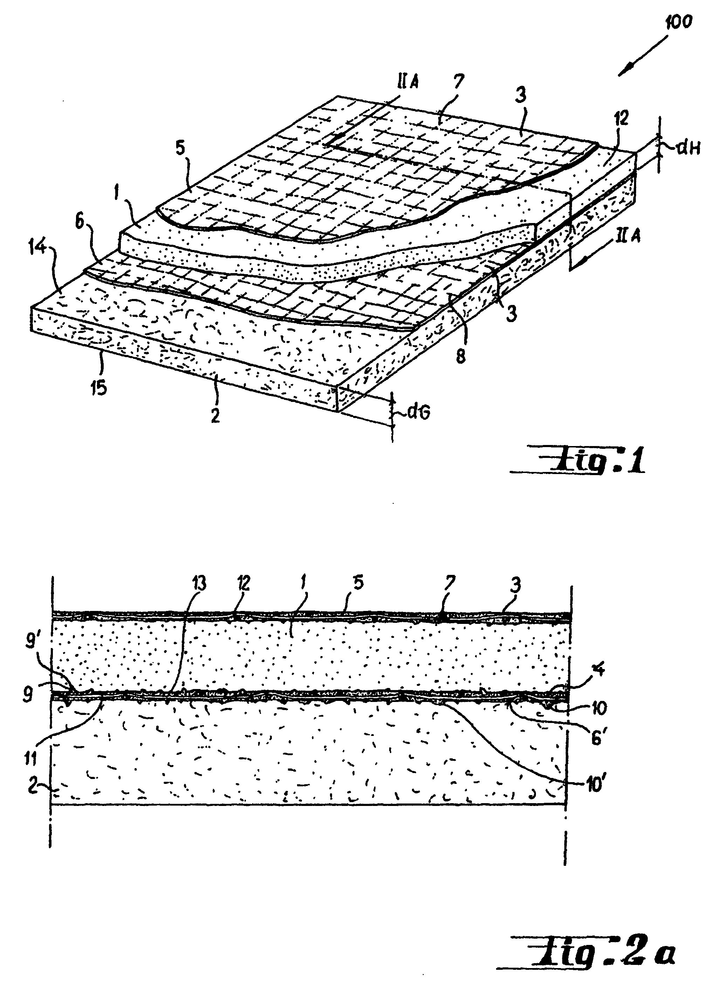

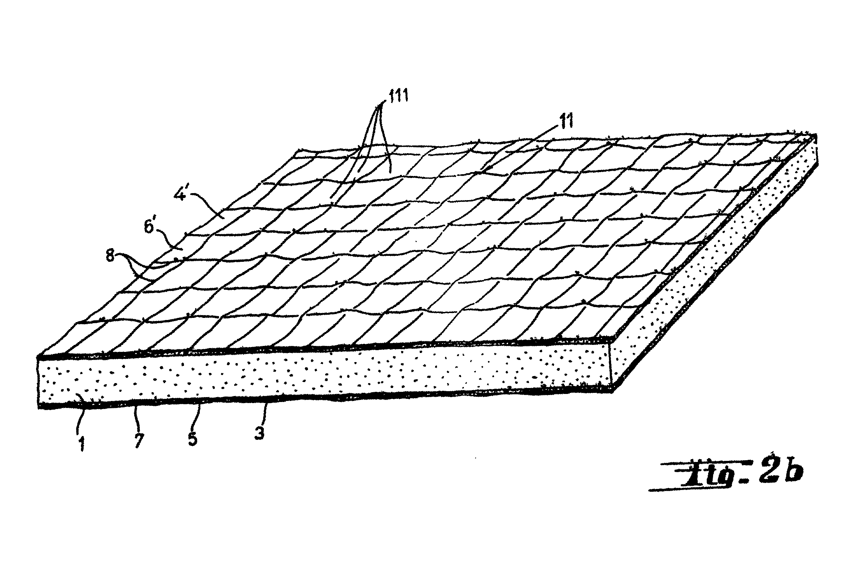

Hauptbestandteile einer in den Fig. 1 und 2a dargestellten Dämmplatte 100 sind eine Kunststoff-Hartschaumplatte 1 und eine Gummi-Krepplatte 2. Die Kunstsoff-Hartschaumplatte besteht aus geschäumten Hartschaum, wobei durch das Schäumen in der Platte kleinste Lufteinschlüsse vorhanden sind und insbesondere die Außenseiten 12 und 13 Schaumstoff-Vertiefungen 9 aufweisen. Auf die Kunststoff-Hartschaumplatte 1 werden äußere Schichten 3 und 4' aufgebracht, die aus einem Kunststoffmörtel 5 bzw. 6', in den jeweils ein Armierungsgewebe 7 bzw. 8 eingebettet ist, bestehen. Wesentlich ist, daß das Armierungsgewebe 7 bzw. 8 im spannungslosen Zustand im Kunststoffmörtel 5 bzw. 6' eingelegt wird, so daß es zu keinerlei Spannungen auf der Oberfläche der Kunststoff-Hartschaumplatte 1 kommen kann. Beim Aufbringen der äußeren Schichten bildet sich eine Gitterfläche 11 aus (vgl. Fig. 2b) mit Gittervertiefungen 111.

Die Gummi-Krepp-Platte 2 besteht aus zerkleinerten Altgummiresten, sie entsprechend in eine Form gebracht sind. vorteilhafter Weise geschieht das in der Art, daß die gehäckselten Altgummiteile zusammen mit einer sie verbindenden Masse, z.B. flüssigem Kautschuk oder dergleichen Masse oder durch Druck- und Temperatureinwirkungen zu einer Gummischrottmatte geformt werden. Diese Gummischrottmasse weist Gummihäcksel unterschiedlicher Länge und Breite auf, die unter Einschluß von Luft in die gewünschte Form gebracht ist. Die Gummihäckselteilchen umschliessen bei ihrem Zusammenfügen zu einer Gummischrottmatte in sich die Luft ein, die vorzugsweise zwischen 5 und 60 % betragen kann. Durch den Abstand der einzelnen Gummihäcksel und die eingeschlossene Luft wird das Dämmverhalten der Gummi-Krepplatte 2 bestimmt. Auch wenn die Gummi-Krepplatte über im wesentlichen glatte Außenflächen 14, 15 verfügt, weisen diese jedoch Krepp-Vertiefungen zwischen den einzelnen Gummihäckselteilchen auf.

Wie die Fig. 1 und 2a zeigen, haben die Kunststoff-Hartschaumplatte 1 und die Gummi-Krepplatte 2 eine in etwa gleich Dicke dH bzw. dG. Um die beiden so vorbereiteten Platten miteinander verbinden zu können, wird zwischen der äußeren Schicht 4' der Kunststoff-Hartschaumplatte 1 und der Außenfläche 14 der Gummi-Krepplatte ein flüssiger Kunststoffmörtel 6 eingebracht. Dieser Kunststoffmörtel 6 verteilt sich gleichmäßig in den Krepp-Vertiefungen 10 der Gummi-Krepp-Platte 2 und den Gitter-Vertiefungen 111 der äußeren Schicht 4'. In Fig. 2b sind diese Gittervertiefungen 111 im Detail dargestellt. Sie entstehen dardurch, daß das Armierungsgewebe 8 zwar in den ausgehärteten Kunststoffmörtel 6' eingebettet ist, aber von diesem umgeben profiliert nach außen ragt. Hierdurch treten von Kunststoffmörtel 6' allseitig umgebende Fäden des Armierungsgewebes 8 über die Oberfläche der äußeren Schicht 4' hervor und umschließen im wesentlichen viereckige Flächen, die gegenüber der äußersten Höhe abgesenkt sind. Beim Verkleben verteilt sich der flüssige Kunststoffmörtel gleichmäßig in diese Gittertiefflächen 11 und in die Krepp-Vertiefungen 10 und bildet nach dem Aushärten Flächenankerelemente 11' gegenüber der Kunststoff-Hartschaumplatte 1 und Lunker-Ankerelemente 10' gegenüber der Gummi-Krepplatte 2. Durch diese vielfachen Anker zwischen beiden Platten 1 und 2 entsteht eine solche Verbindung zwischen ihnen, daß sie nach außen und beim Verarbeiten als eine einstückig Platte erscheinen. Beim Aufbringen des Kunststoffmörtel 6 über den Kunststoffmörtel 6' vollzieht sich darüber hinaus eine materialtechnische Einheit dergestalt, daß der Kunststoffmörtel 6' mit dem neu aufgebrachten Kunststoffmörtel 6 und dem darin befindlichen Armierungsgewebe 8 zu einer Zwischenschicht 4 aggregieren, die beide Platten 1 und 2 zusammenhält.

Bei einer weiteren Verbindungsvariante wird eine einseitig beschichtete Kunststoff-Hartschaumplatte 1 mit einem Kunststoffmörtel 6 versehen, in das das Armierungsgewebe 8 gebettet wird und auf das anschließend im noch flüssigen Zustand die Gummi-Krepplatte 2 aufgelegt wird, so daß eine Art "Sandwich" entsteht, derart, daß zwischen der Kunststoff-Hartschaumplatte 1 und der Gummi-Krepp-Platte 2 eine Zwischenschicht 4 angeordnet ist, die durch den Kunststoffmörtel 6 und das Armierungsgewebe 8 gebildet wird. Hierbei fließt in die Schaumstoff-Vertiefungen 9 der Kunststoff-Hartschaumplatte 1 flüssiger Kunststoffmörtel 6 ein, der nach dem Aushärten Lunkerankerelemente 9' ausbildet. Diese Lunker-Ankerelemente 9' haben im wesentlichen die gleiche Haftfähigkeit wie die Lunker-Ankerelemente 10'. Wesentlich ist, daß die Lunker-Ankerelemente 9', 10' eine Pilz- oder verästelte, wurzelähnliche Struktur aufweisen. Der flüssige Mörtel dringt in die Schaumstoff- und Krepp-Vertiefungen 9, 10 ein und füllt diese so weit aus, wie es diese zulassen. Die Dichte und die Verästelung sorgen für einen hohen Verbindungsgrad.

Wie und in welcher Form die Zwischenschicht 4 letztendlich ausgebildet ist, wird durch das jeweilige Herstellungsverfahren bestimmt. Wesentlich ist aber, das die Kunststoff-Hartschaumplatte 1 und die Gummi-Krepplatte 2 durch die Lunker-Ankerelemente 9' und 10' sowie durch die beschriebenen Flächenankerelemente 11' die auf beiden Seiten des Armierungsgewebes 8 vorhanden sind zusammengehalten werden.

In Fig. 2c ist eine Nebeneinanderverlegung zweier Dämmplatten 100 gezeigt. Hierzu wird die Gummi-Krepplatte 2 der vorderen Dämmplatte 100 über die Kunststoff-Hartschaumplatte 1 geführt. Bei der danebenliegenden Dämmplatte steht die Kunststoff-Hartschaumplatte 1 über der Gummi-Krepplatte 2 über. Beide Überstände sind im wesentlichen gleich. Beim Verlegen der beiden so vorbereiteten Dämmplatten entsteht eine Stufenfalz 16. Das Mebeneinanderverlegen der Dämmplatten 100 mit den Stufenfalzen 16 hat den Vorteil, daß wärme- und schallisolierende Brücken entstehen, so daß die einzelnen Dämmplatten im verlegten Zustand wie eine Groß-Dämmplatte wirken.

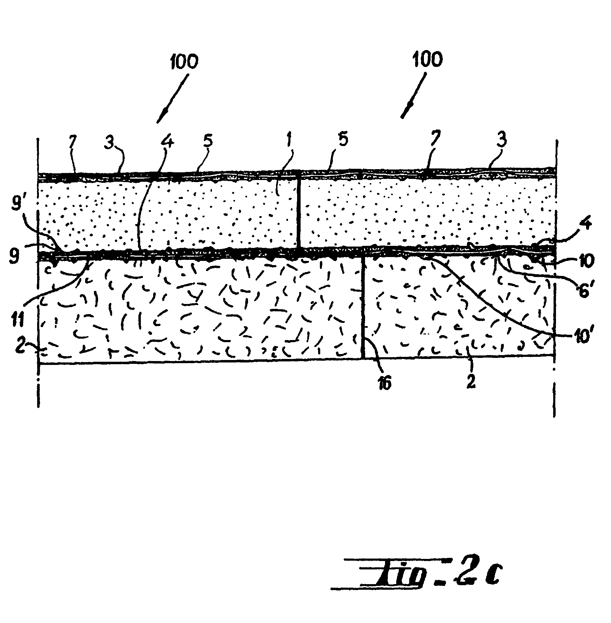

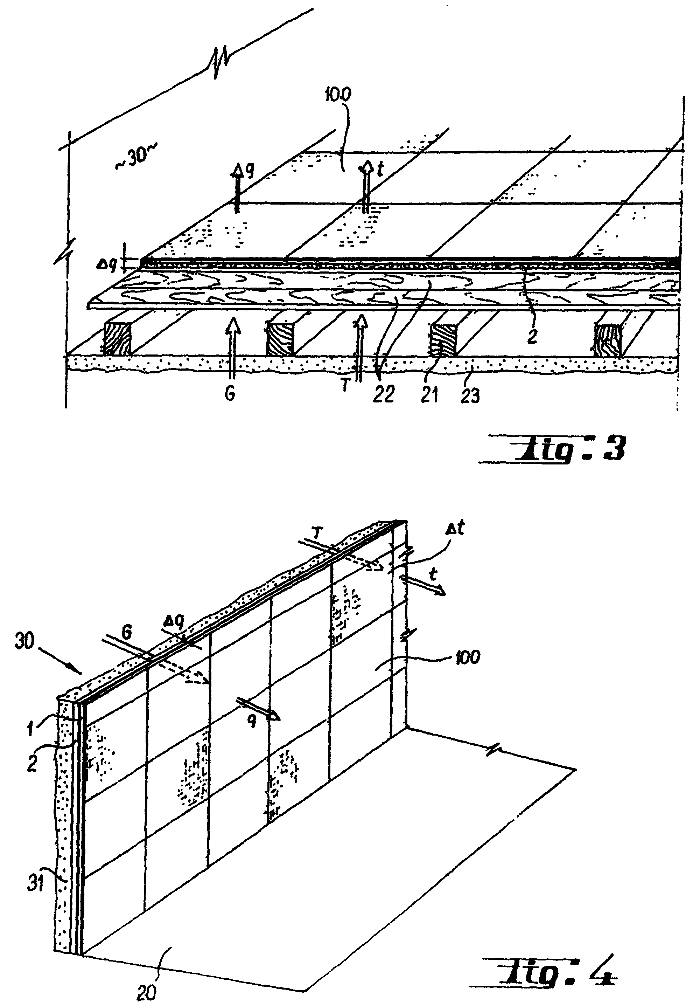

In den Figuren 3 und 4 sind Einsatzmöglichkeiten der so hergestellten Dämmplatte 100, die eine Länge von ca 0,8 m bis 30 m und eine Breite von 0,3 m bis 30 m haben kann, dargestellt. Die Dämmplatte 100 eignet sich dabei besonders für die Sanierung von Altbauten.

Fig. 3 zeigt einen Fußbodenaufbau 20. Er ist z.B. in Altbauten derart aufgebaut, daß nebeneinander tragende Hölzer 21 angeordnet sind. Auf der Unterseite können die tragenden Hölzer mit einem Deckenputz 23 in entsprechender Ausführung versehen sein. Auf der entgegengesetzten Seite sind die tragenden Hölzer 21 mit Fußbodenbrettern 22 belegt, die entsprechend durch Holz- oder Stahlnägel befestigt sind. Auf die Fußbodenbretter 22 werden nun nebeneinander Dämmplatten 100 gemäß Fig. 2c so gelegt, daß die Gummi-Krepplatte 2 auf die Fußbodenbretter 22 zu liegen kommt. Die Kunststoff-Hartschaumplatte 1 mit der äußeren Schicht 3 zeigt dabei in das Innere des Raumes. Nachdem die Fußbodenbretter 22 gleichmäßig mit Dämmplatten 100 ausgelegt sind, steht die äußere Schicht 3 der Kunststoff-Hartschaumplatte 1 für eine weitere Verarbeitung zur Verfügung. Hierbei ist es z.B. möglich, auf der äußeren Schicht 3 eine Verfliesung vorzunehmen.

In Fig. 4 ist ein Wandaufbau 30 eines zu sanierenden Gebäudes gezeigt. Auf einem Rohrverputz 31 werden mit der Gummi-Krepplatte 2 zur Wand hinzeigend Dämmplatten 100 angeordnet. Sie können dabei ebenso wie beim Verlegen auf den Fußbodenbrettern 22 angeklebt oder angenagelt werden. Die nach außen zeigende äußere Schicht 3 der Kunststoff-Hartschaumplatte 1 kann anschließend verfliest, tapeziert, verputzt oder in einer anderen Form weiter behandelt werden.

Wesentlich ist, daß die Dämmplatten 100 die Außentemperaturen T wesentlich gedämmt zu nach innen gerichteten Temperaturen t herabsetzen. Bbenso wird das Außengeräuech G auf ein Innengeräusch g reduziert. Die erreichte Wärmedämmung Δt bzw. die Geräuschedämmung Δg erzeugt Werte bis zu 30 bis 60 %. Je nach der zu wählenden Dicke dH bzw. dG kann entweder die Wärme- oder die Temperaturdämmung Δg bzw. Δt entsprechend variiert werden. Wesentlich ist, daß durch die beschriebene erfinderische Zwischenschicht 4 beide Platten 1 und 2 derart verbunden sind, daß die Dämmplatte 100 darüber hinaus eine hohe mechanische Festigkeit aufweist. Wesentlich ist darüber hinaus, daß durch die Steifigkeit der Dämmplatte 100 diese sich durch Sägen, Bohren oder dergleichen entsprechend bearbeiten läßt.

## Patentansprüche

1. Halbzeug, nämlich Dämmplatte, insbesondere für einen Fußboden- oder Wandaufbau, aufweisend
- wenigstens zwei Platten (1, 2) mit Material-Oberflächenvertiefungen (9, 10, 111),
- eine Verbindungsschicht (4) mit einem ersten Armierungsgewebe (8) und Verankerungselementen (9', 10', 11') und
- einen ersten aushärtbaren Kunststoffmörtel (6) zur Verbindung beider Platten (1, 2),
**dadurch gekennzeichnet,**
- **daß** die zweite Platte eine Gummi-Krepp-Platte (2) ist, die Krepp-Vertiefungen als Material-Oberflächenvertiefungen aufweist,
- **daß** zum Verbinden der Gummi-Krepp-Platte (2) mit der ersten Platte (1) «wischen eine der Außenflächen (14, 15) der Gummi-Krepp-Platte (2) und eine der Außenseiten (12, 13) der ersten Platte (1) das erste Armierungsgewebe (8) und der erste aushärtbare Kunststoffmörtel (6) eingebracht ist, der in die Krepp-Vertiefungen (10) und die Material-Oberflächenvertiefungen (9, 111) der ersten Platte (1) fließt und nach dem Aushärten Lunker-Ankerelemente (9', 10') und Flächenankerelemente (11) als Verankerungselemente und eine Zwischenschicht als Verbindungsschicht ausbildet und
- **daß** die erste Platte (1) aus Kunststoff-Hartschaum und/oder aus Fasern, Kugeln, Schnitzeln, Streifen, Teilstücken oder Stücken aus organischen und/oder anorganischen Stoffen besteht.

2. Halbzeug nach Anspruch 1, **dadurch gekennzeichnet, daß** die erste Platte (1) auf wenigstens einer Außenseite (12, 13) eine äußere Schicht (3', 4') aus einem zweiten aushärtbaren Kunststoffmörtel (6, 6') trägt, in den ein zweites Armierungsgewebe (7) eingebettet ist.

3. Halbzeug nach Anspruch 1, **dadurch gekennzeichnet, daß** die Gummi-Krepp-Platte (2) auf wenigstens einer Außenfläche (14, 15) eine weitere äußere Schicht aus einem dritten aushärtbaren Kunstsstoffmörtel trägt, in den ein drittes Armierungsgewebe eingebettet ist.

4. Halbzeug nach einem der Ansprüche 1 bis 3, **dadurch gekennzeichnet, daß** die jeweils äußere Schicht (3', 4') eine Gittertieffläche (11) mit Gitter-Vertiefungen (111) als Material-Oberflächenvertiefungen aufweist, in denen der erste flüssige Kunststoffmörtel (8) nach dem Aushärten die Flächenankerelemente (11') bildet.

5. Halbzeug nach einem der Ansprüche 1 bis 4, **dadurch gekennzeichnet, daß** die erste Platte eine Kunststoff-Hartschaumplatte (1) mit Schaumstoff-Vertiefungen (9) als Material-Oberflächenvertiefungen (9') ist, in die der erste flüssige Kunststoffmörtel (8) nach dem Aushärten die Lunker-Ankerelemente (9') bildet.

6. Halbzeug nach einem der Ansprüche 1 bis 5, **dadurch gekennzeichnet, daß** die Armierungsgewebe (7, 8) ein Gewebe aus organischen und/ oder nichtorganischen Stoffen sind, z. B. ein Glasfilament-Gewebe, ein Textil-Gewebe oder ein Metall-Gewebe.

7. Halbzeug nach einem der Ansprüche 1 bis 5, **dadurch gekennzeichnet, daß** die Gummi-Krepplatte (2) aus Gummiteilen, insbesondere zerkleinerten Altgummiresten, hergestellt ist.

8. Halbzeug nach einem der Ansprüche 1 bis 7, **dadurch gekennzeichnet, daß** die Gummiteile durch eine verbindende Masse, Druck- und/oder Temperatureinwirkungen verbunden sind.

9. Halbzeug nach einem der Ansprüche 1 bis 8, **dadurch gekennzeichnet, daß** der Anteil der eingeschlossenen Luftteile 5 bis 60 % des Gesamtvolumens der Gummi-Krepplatte (2) beträgt.

10. Halbzeug nach einem der Ansprüche 1 bis 9, **dadurch gekennzeichnet, daß** die Dicke (dH) der Kunststoff-Hartschaumplatte (1) zur Dicke (dB) der Gummi-Krepp-Platte (2) ein Verhältnis von 0,1, ... 10 : 1, vorzugsweise 1 : 1, hat.

11. Halbzeug nach einem der Ansprüche 1 bis 10, **dadurch gekennzeichnet, daß** die Dämmplatte (100) mit der Gummi-Krepp-Platte (2) bei der Sanierung von Altbauten auf den äußeren Flächen (Fußbodenbretter 22, Rohverputz 31) von Räumen angeordnet ist.

## Claims

1. A semifinished product, i.e. an insulating board, particularly for a floor or wall construction, comprising
- at least two boards (1, 2) formed with surface recesses in the material (9, 10, 111),
- a connecting layer (4) comprising a first reinforcing fabric (8) and anchoring elements (9', 10', 11') and
- a first thermosetting plastic mortar (6) for connecting the two boards (1, 2),
**characterised in that**
- the second board is a rubber-crepe board (2) having recesses in the surface of the crepe,
- in order to join the rubber-crepe board (2) to the first board (1), the first reinforcing fabric (8) and the first thermosetting plastic mortar (6) are inserted between an outer surface (14, 15) of the rubber-crepe board (2) and an outer side (12, 13) of the first board (1), and the mortar flows into the recesses (10) in the crepe and the recesses (9, 111) in the surface of the first board (1) and, after setting, forms cavity anchoring elements (9', 10') and surface anchoring elements (11) and a connecting intermediate layer, and
- the first board (1) is made of rigid foam plastic and/or fibres, balls, chips, strips, parts or pieces of organic and/or inorganic materials.

2. A semifinished product according to claim 1, **characterised in that** the first board (1) on at least one outer side (12, 13) has an outer layer (3', 4') of a second thermosetting plastic mortar (6, 6') in which a second reinforcing fabric (7) is embedded.

3. A semifinished product according to claim 1, **characterised in that** the rubber-crepe board (2) on at least one outer surface (14, 15) has another outer layer of a third thermosetting plastic mortar in which a third reinforcing fabric is embedded.

4. A semifinished product according to any of claims 1 to 3, **characterised in that** the respective outer layer (3', 4') has a recessed lattice surface (11) comprising recesses (111) forming a lattice in the surface of the material and in which the first liquid plastic mortar (8) forms the surface anchoring elements (11') after setting.

5. A semifinished product according to any of claims 1 to 4, **characterised in that** the first board is a rigid foam plastic board (1) with recesses (9') in the surface of the foam material, in which the first liquid plastic mortar (8) forms the cavity anchoring elements (9') after setting.

6. A semifinished product according to any of claims 1 to 5, **characterised in that** the reinforcing fabric (7, 8) is made up of organic and/or non-organic substances, e.g. a glass filament fabric, a textile fabric or a metal fabric.

7. A semifinished product according to any of claims 1 to 5, **characterised in that** the rubber-crepe board (2) is made of rubber parts, more particularly comminuted rubber scrap.

8. A semifinished product according to any of claims 1 to 7, **characterised in that** the rubber parts are connected by a connecting material and by action of pressure and/or temperature.

9. A semifinished product according to any of claims 1 to 8, **characterised in that** the proportion of enclosed air is 5 to 60% of the total volume of the rubber-crepe board (2).

10. A semifinished product according to any of claims 1 to 9, **characterised in that** the ratio of the thickness (dH) of the rigid foam plastic board (1) to the thickness (dB) of the rubber-crepe board (2) is 0.1 to 10:1, preferably 1:1.

11. A semifinished product according to any of claims 1 to 10, **characterised in that** when old buildings are redeveloped, the insulating board (100) and the rubber-crepe board (2) are disposed on the outer surfaces (floorboards 22, rough plasterwork 31) of rooms.

## Revendications

1. Produit semi-fini, à savoir panneau d'isolation, en particulier pour une structure de plancher ou de paroi, comportant :
- au moins deux panneaux (1, 2) présentant des creux dans la surface de la matière (9, 10, 111),
- une couche de liaison (4) comprenant un premier tissu d'armature (8) et des éléments d'ancrage (9', 10', 11') et
- un premier mortier synthétique thermodurcissable (6) pour la liaison des deux panneaux (1, 2),
**caractérisé**
- **en ce que** le deuxième panneau est un panneau de crêpe de caoutchouc (2) qui comporte des creux de crêpage en tant que creux de la surface de la matière,
- **en ce que**, pour la liaison du panneau de crêpe de caoutchouc (2) avec le premier panneau (1), on met en place, entre une des faces extérieures (14, 15) du panneau de crêpe de caoutchouc (2) et un des côtés extérieurs (12, 13) du premier panneau (1), le premier tissu d'armature (8) et le premier mortier synthétique thermodurcissable (6) qui coule dans les creux de crêpage (10) et dans les creux de la surface de la matière (9, 111) du premier panneau (1) et qui, après son durcissement, forme des éléments d'ancrage de retrait (9', 10') et des éléments d'ancrage de surface (11), en tant qu'éléments d'ancrage, et une couche intermédiaire, en tant que couche de liaison, et
- **en ce que** le premier panneau (1) est constitué de mousse synthétique rigide et/ou de fibres, billes, copeaux, bandes, tronçons ou morceaux de matières organiques et/ou minérales.

2. Produit semi-fini selon la revendication 1, **caractérisé en ce que** le premier panneau (1) porte, sur au moins un côté extérieur, (12, 13), une couche extérieure (3', 4') qui est en un deuxième mortier synthétique thermodurcissable (6, 6') et dans laquelle un deuxième tissu d'armature (7) est incorporé.

3. Produit semi-fini selon la revendication 1, **caractérisé en ce que** le panneau de crêpe de caoutchouc (2) porte, sur au moins un côté extérieur (14, 15), une autre couche extérieure qui est en un troisième mortier synthétique thermodurcissable et dans laquelle un troisième tissu d'armature est incorporé.

4. Produit semi-fini selon l'une quelconque des revendications 1 à 3, **caractérisé en ce que** la couche extérieure (3', 4') comporte, à chaque fois, une surface creuse en treillis (11) comportant des creux en forme de treillis (111) en tant que creux de la surface de la matière, dans lesquels le premier mortier liquide synthétique (8) forme, après son durcissement, les éléments d'ancrage de surface (11').

5. Produit semi-fini selon l'une quelconque des revendications 1 à 4, **caractérisé en ce que** le premier panneau est un panneau en mousse synthétique rigide (1) qui présente, en tant que creux de la surface de la matière, des creux de la mousse 9 dans lesquels le premier mortier liquide synthétique (8) forme, après son durcissement, les éléments d'ancrage de retrait (9').

6. Produit semi-fini selon l'une quelconque des revendications 1 à 5, **caractérisé en ce que** les tissus d'armature (7, 8) sont constitués par un tissu en matières organiques et/ou minérales, par exemple un tissu en filaments de verre, un tissu de textile ou un tissu métallique.

7. Produit semi-fini selon l'une quelconque des revendications 1 à 5, **caractérisé en ce que** le panneau en crêpe de caoutchouc (2) est fabriqué à partir de particules de caoutchouc, en particulier de résidus de caoutchouc de récupération.

8. Produit semi-fini selon l'une quelconque des revendications 1 à 7, **caractérisé en ce que** les particules de caoutchouc sont reliées au moyen d'une masse de liaison ou par effets de pression et/ou de température.

9. Produit semi-fini selon l'une quelconque des revendications 1 à 8, **caractérisé en ce que** la teneur en parties d'air incluses est comprise entre 5 à 60 % du volume global du panneau de crêpe en caoutchouc (2).

10. Produit semi-fini selon l'une quelconque des revendications 1 à 9, **caractérisé en ce que** le rapport de l'épaisseur (dH) du panneau en mousse synthétique rigide (1) à l'épaisseur (dB) du panneau de crêpe de caoutchouc (2) est compris entre 0,1 : 10 et 10. : 1, de préférence égal à 1 : 1.

11. Produit semi-fini selon l'une quelconque des revendications 1 à 10, **caractérisé en ce que** le panneau d'isolation (100) est disposé, dans le cas de la rénovation de vieilles constructions, avec le panneau de crêpe de caoutchouc (2), sur les surfaces extérieures (planches de plancher 22, enduit brut 31) de pièces d'habitation.
